# EUROPEAN PATENT SPECIFICATION

(11) **EP 1 609 717 B1**
(45) Date of publication and mention of the grant of the patent: **01.04.2009**
(21) Application number: 04425454.8
(22) Date of filing: 22.06.2004
(51) Int. Cl.: B63B 25/00, B60P 3/075

(54) **Cup, in particular for lashing down vehicles on-board ships, and method for assembling said cup on the deck**
Befestigung, insbesondere zur Vertauung von Fahrzeugen an Bord von Schiffen, und Verfahren zur Anbringung einer solcher Befestigung am Deck
Fixation, notamment pour l'arrimage de véhicles à bord d'un bateau, et procedé pour le sérrage d'une telle fixation sur le pont du bateau

(43) Date of publication of application: 28.12.2005
(73) Proprietor: FINCANTIERI CANTIERI NAVALI ITALIANI S.p.A., 34121 Trieste (IT)
(72) Inventor: Bucci, Claudio, 34100 Trieste (IT); Natali, Giacomo, 90100 Palermo (IT)
(74) Representative: Gerbino, Angelo

(56) References cited:
- US-A- 3 381 925
- US-A- 4 457 650

## Description

### Technical field

The present invention relates to a cup, in particular for lashing down vehicles on-board ships, and to a method for assembling said cup on the deck of a ship. The cups forming the subject of the present invention may be advantageously assembled on loading decks and on vehicle decks of cargo ships, ferries or vessels of various types for lashing down containers, pallets or vehicles.

### Background art

It is known that, during navigation, the merchandise and loads must be fixed firmly to the decks of the ship in order to prevent undesirable movements which may endanger the personnel on-board and cause damage to the said merchandise or to the internal structures of the ship. This problem is particularly serious in rough sea conditions, since the violent movements to which the ship is exposed during these navigation conditions could cause dangerous movements of the load.

Incorrect stability or arrangement of the load may negatively influence the trim of the ship and for this reason the load must be suitably distributed inside the ship so that its weight is balanced overall.

For this purpose, the loading decks are provided with lashing cups or deck sockets suitable for securing lashes or other ties used in order to immobilise the loads. These cups are distributed uniformly in a large number over the whole useful surface area of the loading decks so as to ensure fixing of the load in the most suitable position depending on the stability, space and distribution requirements mentioned above.

As is known, traditionally the structure of the cups varies depending on the type of load to be constrained (containers, pallets, vehicles, etc.), the stresses which must be withstood, as well as the type of tie to which it must be fastened. Some cups of the known type are described, for example, in the US patent No. 4,457,650.

On the market there exist lashing cups which are directly welded onto the walking surface of the deck, from which they therefore project with the whole of their thickness. Other cups, instead, are welded onto the walking surface and inset inside a housing seat previously formed in the thickness of the said deck. In this way, if necessary, the cups are kept level with the walking surface, preventing them from creating an obstacle for the operations to be performed on-deck.

The abovementioned housing seats consist of through-openings which, generally but not necessarily, have a circular shape and are formed directly on the structure of the deck with diameters in the region of 30 cm. The cups must have mechanical strength properties similar to those of the remaining part of the deck since they must be able to withstand the rated load values envisaged for the said decks, such as, for example, the concentrated load due to the wheel of a heavy motor vehicle.

An example of a lashing cup of the traditional type is shown in Figures A and B. The cup, which is indicated in each case by C, essentially consists of a shaped hollowed body formed by an upper plate D, which is intended to be welded in a coplanar manner to the walking surface F, and by a bowl-shaped element E which is welded peripherally underneath the said plate D. An incision T is formed on the plate D, which incision may for example be cross-shaped as in the example shown in the figures and is intended to receive an engaging element Y of a lash for retaining the load. The bowl-shaped element E essentially has the function of closing the incision T, leaving the space necessary for insertion of the engaging element, so as to prevent rain water or anything else which might pass through the incision T from falling onto the underlying deck.

At present, assembly of the abovementioned cup on the deck structure involves two separate operating steps which are performed during different stages of construction of the ship essentially for practical reasons relating to organization of the work.

Initially, a retaining step is performed in order to fix provisionally the cup inside the housing seat. Retention of the cup is achieved by means of spot welds performed along the perimeter of the cup on the side opposite to the walking side. This step is performed during the preliminary stage of construction of the load-bearing structure of the ship, when the decks are upturned with respect to their final position and for this reason are easily accessible on the side opposite to the walking side. In this way the welding personnel is able to operate on this deck side without the need to use scaffolding or perform overhead welds.

This is followed by a strength-welding step which is intended to fasten the cup rigidly to the deck so as to ensure the required structural strength thereof. In this case, a bead of weld is deposited on the walking side along the perimeter of the cup. This step is always performed when the decks of the ship have their walking surface directed upwards, during an advanced stage of construction of the load-bearing structure of the ship.

With reference to Figure B, which shows a cross-sectional view of the cup according to Figure A along the line B-B, the spot welds performed during the retaining step are indicated by S1, while the strength-welding bead is indicated by S2. The plate D has a diameter which is smaller than the diameter of the housing seat so that, once the cup is fixed, a groove is defined for receiving the strength-welding bead between the plate D and the edge of the housing seat. From the same Figure B it can also be seen that, on the walking side, the plate D of the cup is delimited along whole of its external perimeter by an inclined surface which helps define the groove with dimensions suitable for receiving a bead of weld able to satisfy the necessary structural requirements. The angle of inclination α of this inclined surface must in any case be equal to or greater than 45°.

A drawback which frequently occurs during assembly of the cups is the damage to the protective layer of paint or resin present on the deck surface opposite to the walking side. This damage is caused by the high temperatures which are generated in the zones close to the cup housing seat during the strength-welding step.

Once retention of the cups has been performed, when the decks of the ships are still upturned, all the directly accessible surfaces are lined with a paint or with a protective resin, thus avoiding having to perform these operations in more complicated and difficult working conditions. The surface areas where the spot welds are performed during the retention step are also suitably treated and protected.

As already mentioned, once the decks have been arranged with the walking surface directed upwards, strength-welding of the cups is performed. This welding operation has a penetration capacity which is far greater than the spot welds performed during the retention step and may easily involve the whole thickness of the deck until it reaches the surface opposite to the walking surface. This inevitably involves thermal deterioration of the protective layer previously spread over the surface opposite to the walking surface, which must therefore be repaired subsequently.

When the damaged surface forms part of a hold, the damage is of relative importance since the walls of this area are easily accessible and do not require special anti-corrosive treatment. The protective layer may therefore be easily repaired without particular difficulty.

The damage, however, is more important when the damaged surface forms part of a ballast chamber. In this case, it is of fundamental importance that the protective layer is in perfect condition since the walls of this chamber are in direct contact with the sea water and must therefore be particularly corrosion-resistant. The products used for the coating layers (for example epoxy resins) may be easily damaged by heat and often are destroyed irreparably after the strength-welding operations. Owing to the particular working procedures required by the use of these products, the renewal of these protective layers is a very delicate and laborious operation and is also hindered by the fact that usually the environments in which the operating personnel have to work are particularly restricted and difficult to access once the construction of the load-bearing structure of the ship has been completed.

This problem has been only partly solved with a cup provided with a bowl-shaped element E having a diameter greater than that of the plate D. In this way the zone affected by the thermal gradients generated by strength-welding remains within the perimeter of the bowl-shaped element E and it is no longer necessary to renew the protective layer. This solution has the disadvantage, however, that it requires designing of the structure of the cup with considerably larger dimensions.

Traditional cups, including those of the type with an extra large bowl-shaped element, do not allow optimization of the working times since it is required in any case to perform assembly thereof by means of two separate welding operations together with, in nearly all cases, an operation for renewal of the anti-corrosive protective layer. Moreover, owing to the large number of cups which are provided on a loading deck and the high working speeds, it may happen that a certain number of cups are inadvertently missed during the strength-welding operation. It is therefore practically inevitable that welding teams are required to intervene during the more advanced stages of preparation of the ship with consequent successive delays in the work.

### Disclosure of the invention

In this situation, therefore, the object of the present invention is to eliminate the drawbacks of the prior art mentioned above, by providing a lashing cup which may be welded to the deck of a ship without damaging the underlying protective layer.

A further object of the present invention is that of providing a lashing cup which is constructionally simple and operationally entirely reliable.

A further object of the present invention is that of providing a method for assembling these cups, which allows simplification of the operating steps.

A further object of the present invention is that of providing a method for assembling these cups, which allows a reduction in the costs and time required for assembly on the decks.

These and other objects are all achieved by a lashing cup and a method for assembling this cup on a deck of a ship according to the accompanying claims.

### Brief description of the drawings

The technical characteristics of the invention, in accordance with the above objects, may be clearly understood from the contents of the accompanying claims and the advantages thereof will emerge more clearly from the detailed description which follows, with reference to the accompanying drawings which show a purely exemplary and non-limiting embodiment thereof in which:
- Figure 1 shows a plan view of a lashing cup according to a preferred embodiment;
- Figure 2 shows a cross-sectional view of the lashing cup according to Figure 1 along the line indicated by II-II in the same Figure 1;
- Figures 3 and 4 shows a schematic cross-sectional view of a joining portion between the lashing cup according to Figure 1 and the structure of a ship's deck.

### Detailed description

In accordance with the figures in the accompanying drawings, 1 denotes overall a preferred embodiment of a lashing cup according to the present invention.

In the description below reference will always be made to a cup without any dimension projecting beyond the walking surface of the deck. However, this preferred embodiment must not be regarded as limiting, the cup in reality also being able to have parts which project beyond the walking surface of the deck and have the function, for example, of securing lashes or ties distinguished by particular forms of the hooking element.

Moreover, although the cup described below is intended for lashing down vehicles or trailers, the cup according to the present invention may obviously be advantageously used also for lashing down containers, pallets and loads in general, without thereby departing from the scope of the present patent.

The lashing cup 1 according to the invention is intended to be inset in a housing seat formed in the thickness of a ship's deck and then fixed there by means of welding. Further fixing or reinforcing means, such as bolts or pins, may be envisaged, said elements being inserted so as to provide a connection between the deck and the cup 1 both on the walking surface and on the opposite side.

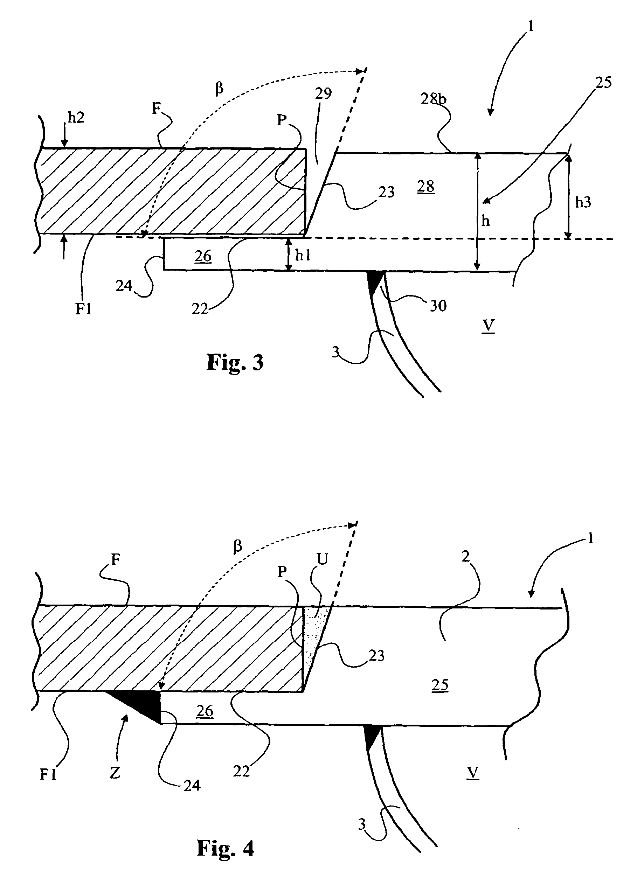

Below the cup 1 will therefore be described with reference to a housing seat Q formed in the thickness of the deck and defined by a perimetral wall P, as can be appreciated in particular from Figure 3. The perimetral wall P, extending through the whole thickness of the deck, is delimited between the walking surface F of the deck and the surface opposite it F1. The perimetral surface P may be at right angles to the walking surface F or may also be inclined with respect to the said surface depending on the shape of the cup 1 which is to be seated.

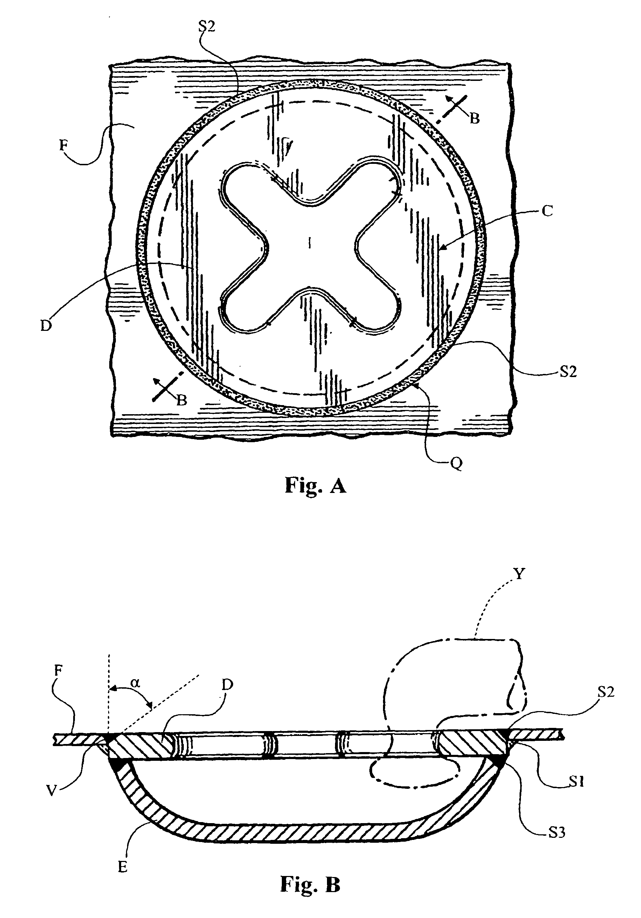

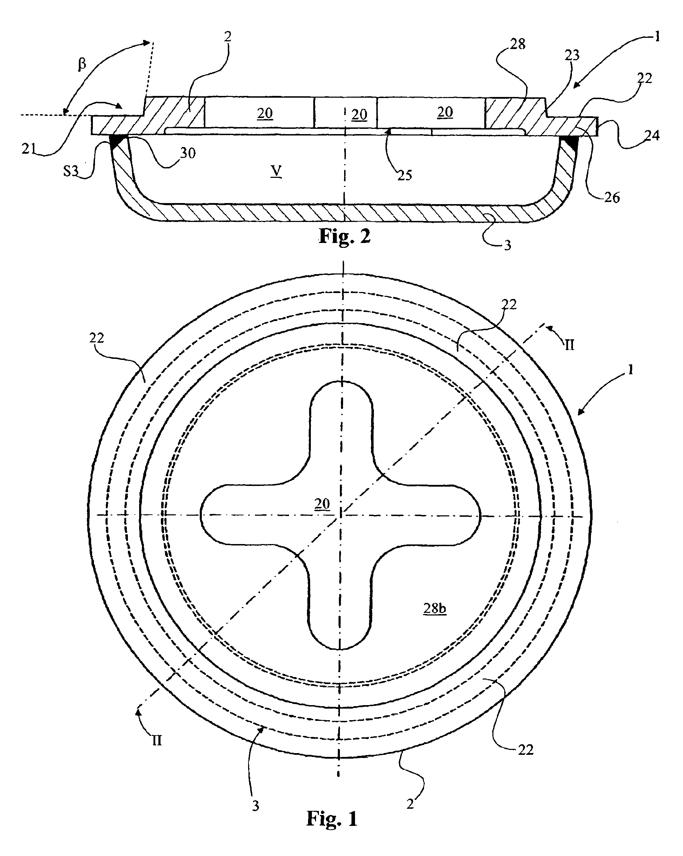

As can be seen in Figures 1 and 2, the cup 1 is essentially a hollow body formed by a sheet-like element 2 and a bowl-shaped element 3.

The sheet-like element 3 forms the upper portion of the cup and is positioned so as to close the housing seat Q continuously with the remaining walking surface F of the deck. The sheet-like element 3 is provided with a through-opening 20 suitably shaped so as to allow securing of an engaging element and is delimited in its thickness by a side surface 1 intended to interface with the perimetral wall P of the housing seat. Depending on specific applicational requirements, the sheet-like element may also have concave or convex portions. Operationally it transmits onto the deck structure all the mechanical stresses received from the ties used for fixing the load.

In accordance with a preferred embodiment of the cup shown in Figures 1, 2, 3 and 4, the sheet-like element 2 has a circular shape in order to facilitate insertion of the cup 1 inside the housing seat Q and extends substantially in a single plane which is parallel to the walking surface F when the cup 1 is assembled on the deck. The through-opening 20, which is formed in its centre, is cross-shaped. In accordance with other embodiments, which are not shown here, the sheet-like element 3 may be shaped with geometrical forms different from a circular shape, and likewise the said through-opening 20 may also have a different shape.

The bowl-shaped element 3 forms the bottom portion of the cup 1 and is provided with a fixing edge 30 along which it is welded to the sheet-like element 2, on the opposite side to the walking side. The weld S3 for fixing the bowl-shaped element 3 onto the sheet-like element 2 is performed directly during manufacture and therefore need not be performed at the time of assembly of the cup 1 on the deck.

The bowl-shaped element 3 allows closing of the through-opening 20 so as to prevent objects, liquids or the like from falling onto the underlying deck. For this purpose, the bowl-shaped element 3 is fixed to the sheet-like element 2 so that the perimeter of the said bowl-shaped element 3 completely encloses inside it the through-opening 20.

The walls of the bowl-shaped element 3 and the sheet-like element 2 define an empty volume V inside the cup 1. This volume V essentially has the function of ensuring sufficient manoeuvring space for inserting into the through-opening 20 an engaging element of a lash (not shown in the figures since it is of the type known per se). In other embodiments of the cup 1 (not shown in the accompanying figures), all falling within the scope of the present invention, the volume V may be obtained with the aid of rounding of the sheet-like element 2 which enables the concavity of the bowl-shaped element 3 to be reduced to the point of envisaging that the latter may also be replaced by a substantially flat sheet.

According to an essential characteristic feature of the present invention, the side surface 21 of the sheet-like element 2 has a discontinuity, and in particular comprises:
- a contact surface 22, which is intended to interface with the surface of the deck F1 opposite to the walking surface F;
- a welding surface 24, which is intended to interact with at least one welding bead for structural connection with the surface of the deck F1 opposite to the walking surface F; and
- a sealing surface 23, which is inclined with respect to the contact surface 22 at an angle of inclination β ranging between 90° and 105° and is able to define, together with the perimetral wall P of the housing seat Q, a cavity 29 which is intended to receive a filling of sealing material for preventing infiltration between the cup 1 and the said deck.

The contact surface 22 is situated between the sealing surface 23 and the welding surface 24 so that the sealing surface 23 and the welding surface 24 are arranged in the vicinity, respectively, of the perimetral wall P and of the surface of the deck F1 opposite to the walking surface F, for effecting sealing and welding of the cup 1 to the deck.

In greater detail, again in accordance with the preferred embodiment illustrated in particular in Figures 1 and 2, the sheet-like element 2 is formed by a main body 25 with a circular cross-section, in the centre of which a cross-shaped through-opening 20 is formed, and by a circular projecting edge 26 with a thickness h₁, which extends from the side surface 21 concentrically with the abovementioned main body 25, its surface opposite to the walking surface being continuous.

The main body 25 has a height h which is greater than the thickness h₁ of the projecting edge 26 and extends along its height h with a frustoconical portion 28 defined laterally by an inclined surface which forms the sealing surface 23 of the cup 1 and at the top by the walking surface 28b of the cup 1. The projecting edge 26 is in turn defined at the top by a surface in the form of a circular rim which forms the contact surface 22 of the cup 1 and laterally by a peripheral surface which forms the welding surface 24 of the cup 1.

The side surface 21 of the cup 1 as defined above has a step-shaped profile which is intended to engage in a force-fitting manner with the perimetral wall P of the housing seat Q.

The frustoconical portion 28 of the main body 25 may be easily inserted inside the housing seat, having a diameter which is on average smaller than that of the housing seat Q. The projecting edge 26, which has instead a larger diameter, allows the cup 1 to abut firmly against the deck structure in the region of the contact surface 22. In order to ensure abutting contact of the contact surface 22 against the deck surface F1 opposite to the walking surface F, the frustoconical portion 28 is formed with a height h₃ equivalent to the thickness of the deck, which is indicated by h₂ in Figures 1 and 2.

As can be seen from the same Figures 1 and 2, the frustoconical portion 28 has, in the region of its wide base situated at the start of the projecting edge 26, a diameter which is equivalent to that of the housing seat. The diameter decreases in the direction away from the projecting edge 26, following the angle of inclination β of the sealing surface 23. A preferred value for the angle of inclination β of the sealing surface 23 is 95°. When the cup is inserted into the housing seat, the base of the frustoconical portion 28, together with bearing contact of the contact surface 22 against the surface F1 of the deck opposite to the walking surface, interferes with the perimetral wall P of the housing seat Q, forming a force-fit inside the latter and thus allowing locking of the cup 1 inside the said seat Q.

Advantageously, the contact surface 22 of the projecting edge 26 and the walking surface 28b of the cup 1 lie in two planes which are substantially parallel to each other so that the same contact surface 22 is coplanar with the walking surface F of the deck.

The assembly method according to the invention for assembling a lashing cup of the type described in Claim 1 inside a housing seat formed on the deck of a ship is now described.

The assembly method essentially comprises the following operating steps:
- an insertion step of the cup 1 inside the housing seat Q until the contact surface 22 rests against the surface F1 of the deck opposite to the walking surface F;
- a sealing step during which the cavity 29 defined by the sealing surface 23 of the cup 1 and the perimetral wall P of the housing seat Q is closed with sealing material in order to prevent infiltration of water between the said cup 1 and the deck; and
- a strength-welding step of the cup 1 to the deck in order to mechanically fix the cup 1 to the deck by means of deposition of at least one bead of weld connecting together the welding surface 24 of the cup 1 and the surface of the deck F1 opposite to the walking surface F.

According to a main feature of the invention the abovementioned strength-welding step is the sole welding step envisaged in this assembly method.

In greater detail, this assembly method envisages that the sealing step is performed as two separate steps, namely:
- a deposition step of a layer of sealing material on the sealing surface 23 of the cup 1; and
- a distribution step of the sealing material between the sealing surface 23 of the cup 1 and the perimetral wall P of the housing seat.

The sealing material does not possess mechanical strength characteristics. Advantageously, this sealing material is an organic-based synthetic product, preferably a rubber of the silicone type.

The deposition step of a layer of sealing material is the first step in the assembly method. During this step the sealing material is deposited preferably on the sealing surface 23 of the cup 1, forming a layer of uniform thickness. Alternatively, the sealing material may be deposited on the perimetral wall P of the housing seat Q or on both the surfaces at the same time, although in this latter case the thickness of the two layers must be reduced so as to avoid having excess material when the cup is fitted inside the housing seat.

The deposition step is followed by the insertion step of the cup inside the housing seat Q. During this step, the cup 1 must be forced inside the seat Q until the contact surface 22 adheres to the deck surface F1 opposite the walking surface F. So that the cup 1 abuts firmly against the deck structure it is necessary to overcome the friction resulting from interference between the perimetral wall P of the seat Q and the base of the frustoconical portion 28 of the main body 25 of the cup 1, which will therefore have a diameter with calibrated dimensions.

The abovementioned distribution step of the sealing material between the sealing surface 23 and the perimetral wall P is performed at the same time as the insertion step. In fact, insertion of the cup 1 inside the housing seat Q produces a compressive action which pushes the sealing material so that it occupies the whole of the cavity 29. The sealing material is thus able to adhere to the sealing surface 23 and to the perimetral wall P of the housing seat, forming a sealing filling. Any excess sealing material emerges from the cavity 29 along the walking surface F of the deck.

This is followed by the strength-welding step of the cup 1 to the deck structure 1. For this purpose, a bead of weld is deposited so as to connect together the deck surface F1 opposite the walking surface and the welding surface 24. The bead must be of a size such as to ensure that the cup 1 has an adequate mechanical strength with respect to the stresses resulting from both the load fixing lashes and any static loads which are concentrated on the said cup 1. In Figure 4 it is possible to appreciate the arrangement of the abovementioned sealing filler, which is indicated by the letter U, and the abovementioned strength-welding bead, indicated by the letter Z, with respect to the cup 1 and the deck structure.

According to an important characteristic feature of the present invention, the operating steps described hitherto are all performed during a stage of construction of the ship where the decks are upturned and the surfaces of the decks opposite to the walking surfaces are directly accessible without the use of scaffolding. These steps are all performed before the traditional anti-corrosive surface treatment operations.

Advantageously, the assembly method according to the invention also comprises a trimming step of the sealing material during which the excess sealing material emerging from the cavity 29 is eliminated by means of trimming performed along the walking surface F. This trimming step takes place after the strength-welding step and is performed, as the last step of the assembly method, during a stage of construction of the ship where the decks have the walking surface F directed upwards and the said walking surface F of the decks is directly accessible.

The lashing cup according to the invention and the associated assembly method therefore allow a considerable reduction in the operating costs, in terms of both labour and materials used, while maintaining the same level of quality which can be achieved with conventional cups and methods.

Finally, assembly of the cups on a ship deck is operationally much simpler and faster owing to the method according to the present invention. These advantages are obtained essentially for the following reasons:
- fixing of the cup to the load-bearing structure of the deck requires a single welding operation;
- all the main operating steps during assembly are performed in strict sequence during the same ship construction stage.

Only the trimming step must be performed subsequently, for practical reasons, during a more advanced stage of construction of the ship. This step is only is a surface finishing step which can be readily performed and in practice does not require the use of specialised personnel.

Another important advantage of the present invention consists in the fact that the costs of repairing the anti-corrosive protective layer on the side of the deck F1 opposite to the walking side are completely eliminated. With the present invention, in fact, strength-welding of the cup is performed before - and not after - spreading of the protective layer, as is instead envisaged in assembly methods of the conventional type.

## Claims

1. Cup, in particular for lashing down vehicles on-board ships, intended to be fixed inside a housing seat (Q), which seat is formed in the thickness (h₂) of a ship's deck and is delimited by a perimetral wall (P) lying between the walking surface (F) of the deck and the surface (F1) opposite thereto, comprising:
- a sheet-like element (2) provided with a shaped through-opening (20) for securing an engaging element and delimited by a side surface (21) intended to interface with said perimetral wall (P) of the housing seat (Q); and
- a bowl-shaped element (3) fixed to said sheet-like element (2) for closing said through-opening (20);
said cup (1) being **characterized in that** said side surface (21) comprises in turn:
- a contact surface (22), which is intended to rest against the surface (F1) of the deck opposite to the walking surface (F);
- a welding surface (24), which is intended to interact with at least one welding bead (Z) for structural connection with the surface (F1) of the deck opposite to the walking surface (F); and
- a sealing surface (23), which is inclined with respect to said contact surface at an angle (β) ranging between 90° and 105° and is able to define, together with the perimetral wall (P) of the housing seat (Q), a cavity (29) which is intended to receive a filling (U) of sealing material for preventing infiltration between the cup (1) and the said deck;
said contact surface (22) being situated between said sealing surface (23) and said welding surface (24) so that said sealing surface (23) and said welding surface (24) are arranged in the vicinity, respectively, of the perimetral wall (P) and the surface of the deck (F1) opposite to the walking surface (F), for effecting sealing and welding of the cup (1) to the deck.

2. Lashing cup according to Claim 1, in which said sealing surface (23) of the sheet-like element (2) extends heightwise with a thickness (h₃) equivalent to that of the deck.

3. Lashing cup according to any one of the preceding claims, in which said sheet-like element (2) has a circular shape.

4. Lashing cup according to Claim 3, in which said sealing surface (23) extends in a tapered manner from said contact surface (22) to a walking surface (28b) of the said cup and has a diameter which is substantially equivalent to the diameter of the housing seat (Q) in the vicinity of said contact surface (22) so as to allow engagement with interference of said cup (1) inside said housing seat (Q).

5. Lashing cup according to any one of the preceding claims, in which said through-opening (20) is cross-shaped.

6. Method for assembling a lashing cup according to Claim 1 inside a housing seat (Q) formed on the deck of a ship, **characterized in that** it comprises the following operating steps:
- an insertion step of the cup (1) inside the housing seat until said contact surface (22) rests against the surface (F1) of the deck opposite to the walking surface (F);
- a sealing step during which said cavity (29) is closed with sealing material in order to prevent infiltration of water between the cup (1) and the housing seat (Q);
- a strength-welding step of the cup (1) to the deck in order to fix mechanically the cup (1) to the deck by means of deposition of at least one bead of weld (Z) connecting together said welding surface (24) of the cup (1) and the deck surface (F1) opposite to the walking surface (F).

7. Method according to Claim 6, in which said strength-welding step is the only welding step envisaged in this assembly method.

8. Method according to Claim 6 or 7, **characterized in that** it is performed during a stage of construction of the ship where the decks are upturned and the surfaces of the decks opposite to the walking surfaces are directly accessible without the use of scaffolding.

9. Method according to Claims 6, 7 or 8, in which said sealing step comprises a deposition step of a layer of material on at least either one of said sealing surface (23) of the cup and said perimetral wall (P) of the housing seat (Q), said deposition step preceding said insertion step of the cup (1) inside the housing seat (Q).

10. Method according to Claim 9, in which said sealing step also comprises a distribution step of said sealing material between said sealing surface (23) of the cup (1) and the perimetral wall (P) of the housing seat (Q), said distribution step being performed substantially at the same time as said insertion step of the cup (1) inside the housing seat (Q) and being able to achieve filling of said cavity (29).

11. Method according to Claim 10, in which said sealing material during said distribution step is forced to occupy the whole of the cavity (29) by means of a compressive action produced by insertion of said cup (1) inside the housing seat (Q).

12. Method according to any one of Claims 6, 7, 9, 10 and 11, comprising a trimming step, along the walking surface (F), of the sealing material emerging from said cavity (29) during said insertion step of the cup inside the housing seat, said trimming step being performed after said strength-welding step.

13. Method according to Claim 12, in which said trimming step is performed during a stage of construction of the ship where the decks have their walking surface (F) directed upwards and the said walking surface (F) of the decks is directly accessible.

14. Method according to any one of Claims 6 to 13, in which said sealing material does not possess mechanical strength characteristics.

15. Method according to Claim 14, in which said sealing material is an organic-based synthetic product.

16. Method according to Claim 15, in which said sealing material is a rubber of the silicone type.

## Patentansprüche

1. Befestigung bzw. Topf, insbesondere zur Vertauung von Fahrzeugen an Bord von Schiffen, der im Inneren eines Gehäuseauflagers (Q) befestigt werden soll, wobei das Auflager in der Dicke (h2) eines Schiffsdecks ausgebildet ist und von einer Außenwand (P) begrenzt ist, die zwischen der begehbaren Fläche (F) des Decks und der dazu entgegengesetzten Oberfläche (F1) liegt, umfassend:
- ein plattenähnliches Element (2), das zwischen einer geformten Durchgangsöffnung (20) zum Befestigen eines Eingreifelementes bereitgestellt und von einer seitlichen Oberfläche (21) begrenzt ist, die eine Grenzfläche mit der Außenwand (P) des Gehäuseauflagers (Q) bilden soll; und
- ein napfförmiges Element (3), das an dem plattenähnlichen Element (2) zum Schließen der Durchgangsöffnung (20) befestigt ist;
wobei der Topf (1) **dadurch gekennzeichnet ist, dass** die seitliche Oberfläche (21) ihrerseits umfasst:
- eine Kontaktfläche (22), die an der Oberfläche (F1) des Decks entgegengesetzt zu der begehbaren Oberfläche (F) anliegen soll;
- eine Schweißfläche (24), die für die strukturelle bzw. konstruktive Verbindung mit der Oberfläche (F1) des Decks entgegengesetzt zu der begehbaren Oberfläche (F) mit wenigstens einer Schweißperle (Z) wechselwirken soll; und
- eine Dichtungsfläche (23), die in Bezug auf die Kontaktfläche in einem Winkel (β) im Bereich zwischen 90° und 105° geneigt ist und fähig ist, zusammen mit der Außenwand (P) des Gehäuseauflagers (Q) eine Kavität bzw. einen Hohlraum (29) zu definieren bzw. zu begrenzen, der dazu gedacht ist, eine Füllung (U) aus Dichtungsmaterial aufzunehmen, um ein Eindringen zwischen dem Topf (1) und dem Deck zu verhindern;
wobei die Kontaktfläche (22) sich zwischen der Dichtungsfläche (23) und der Schweißfläche (24) befindet, so dass die Dichtungsfläche (23) und die Schweißfläche (24) jeweils in der Nähe der Außenwand (P) und der Oberfläche des Decks (F1) entgegengesetzt zu der begehbaren Oberfläche (F) angeordnet sind, um die Dichtung und Verschweißung des Topfs (1) mit dem Deck zu bewirken.

2. Zurrtopf nach Anspruch 1, wobei die Dichtungsfläche (23) des plattenähnlichen Elements (2) sich in der Höhe mit einer Dicke (h3) erstreckt, die der des Decks entspricht.

3. Zurrtopf nach einem der vorangehenden Ansprüche, wobei das plattenähnliche Element (2) eine kreisförmige Form hat.

4. Zurrtopf nach Anspruch 3, wobei die Dichtungsfläche (23) sich in einer konisch zulaufenden Weise von der Kontaktfläche (22) zu einer begehbaren Oberfläche (28b) des Topfs erstreckt und einen Durchmesser hat, der im Wesentlichen dem Durchmesser des Gehäuseauflagers (Q) in der Nähe der Kontaktfläche (22) entspricht, um das Eingreifen mit dem Eingriff des Topfs (1) im Inneren des Gehäuseauflagers (Q) zuzulassen.

5. Zurrtopf nach einem der vorangehenden Ansprüche, wobei die Durchgangsöffnung (20) kreuzförmig ist.

6. Verfahren zum Zusammenmontieren eines Zurrtopfs nach Anspruch 1 im Inneren eines Gehäuseauflagers (Q), das auf dem Deck eines Schiffs ausgebildet ist, **dadurch gekennzeichnet, dass** es die folgenden Arbeitsschritte umfasst:
- einen Einsetzschritt des Topfs (1) im Inneren des Gehäuseauflagers, bis die Kontaktfläche (22) an der Oberfläche (f1) des Decks entgegengesetzt zu der begehbaren Oberfläche anliegt;
- einen Dichtungsschritt, während dem der Hohlraum (29) mit Dichtungsmaterial verschlossen wird, um das Eindringen von Wasser zwischen dem Topf (1) und dem Gehäuseauflager (Q) zu verhindern;
- einen Festigkeitsschweißschritt des Topfs (1) an das Deck, um den Topf (1) mittels der Ablagerung von wenigstens einer Schweißperle (Z), welche die Scµweißfläche (24) des Topfs (1) und die Deckoberfläche (F1) entgegengesetzt zu der begehbaren Oberfläche (F) verbindet, mechanisch an dem Deck zu befestigen.

7. Verfahren nach Anspruch 6, wobei der Festigkeitsschweißschritt, der einzige in diesem Montageverfahren vorgesehene Schritt ist.

8. Verfahren nach Anspruch 6 oder 7, **dadurch gekennzeichnet, dass** es während eines Schiffsbaustadiums durchgeführt wird, in dem die Decks umgedreht sind und die Oberflächen der Decks entgegengesetzt zu den begehbaren Oberflächen ohne die Verwendung von Gerüstmaterial direkt zugänglich sind.

9. Verfahren nach den Ansprüchen 6, 7 oder 8, wobei der Dichtungsschritt einen Ablagerungsschritt für eine Materialschicht auf der Dichtungsfläche (23) des Topfs und/oder der Außenwand (P) des Gehäuseauflagers (Q) umfasst, wobei der Ablagerungsschritt dem Einsetzschritt des Topfs (1) ins Innere des Gehäuseauflagers (Q) vorausgeht.

10. Verfahren nach Anspruch 9, wobei der Dichtungsschritt auch einen Verteilungsschritt für das Dichtungsmaterial zwischen der Dichtungsfläche (23) des Topfs (1) und der Außenwand (P) des Gehäuseauflagers (Q) umfasst, wobei der Verteilungsschritt im Wesentlichen gleichzeitig mit dem Einsetzschritt des Topfs (1) ins Innere des Gehäuseauflagers (Q) durchgeführt wird und fähig ist, die Füllung des Hohlraums (29) zu erreichen.

11. Verfahren nach Anspruch 10, wobei das Dichtungsmaterial während dem Verteilungsschritt mit Hilfe einer durch das Einsetzen des Topfs (1) in das Gehäuseauflager (Q) erzeugten Kompressionswirkung gezwungen wird, den gesamten Hohlraum (29) auszufüllen.

12. Verfahren nach einem der Ansprüche 6, 7, 9, 10 und 11, das einen Beschneidungsschritt entlang der begehbaren Oberfläche (F) des Dichtungsmaterials umfasst, das während des Einsetzschritts des Topfs ins Innere des Gehäuseauflagers aus dem Hohlraum (29) hervortritt, wobei der Beschneidungsschritt nach dem Festigkeitsschweißschritt durchgeführt wird.

13. Verfahren nach Anspruch 12, wobei der Beschneidungsschritt während eines Schiffsbaustadiums durchgeführt wird, in dem die begehbare Oberfläche (F) der Decks nach oben gerichtet ist und die begehbare Oberfläche (F) der Decks direkt zugänglich ist.

14. Verfahren nach einem der Ansprüche 6 bis 13, wobei das Dichtungsmaterial keine wesentlichen mechanischen Festigkeitseigenschaften besitzt.

15. Verfahren nach Anspruch 14, wobei das Dichtungsmaterial ein organisch-basiertes synthetisches Produkt ist.

16. Verfahren nach Anspruch 15, wobei das Dichtungsmaterial ein Kautschuk bzw. Gummi vom Silikontyp ist.

## Revendications

1. Godet pour en particulier arrimer des véhicules à bord de bateaux, destiné à être fixé à l'intérieur d'un siège de logement (Q), lequel siège est formé dans l'épaisseur (h2) d'un pont d'un bateau et est délimité par une paroi périmétrique (P) se trouvant entre la surface de marche (F) du pont et la surface (F1) située à l'opposé, comprenant :
- un élément (2) de type feuille fourni avec une ouverture traversante formée (20) permettant de fixer un élément de mise en prise et délimité par une surface latérale (21) destinée à s'interfacer avec ladite paroi périmétrique (P) du siège de logement (Q) ; et
- un élément (3) en forme de bol fixé audit élément (2) de type feuille permettant de fermer ladite ouverture traversante (20) ;
ledit godet (1) étant **caractérisé en ce que** ladite surface latérale (21) comprend à son tour :
- une surface (22) de contact, qui est destinée à reposer contre la surface (F1) du pont opposée à la surface de marche (F) ;
- une surface (24) de soudage, qui est destinée à s'interfacer avec au moins un cordon de soudure (Z) pour une connexion structurelle avec la surface (F1) du pont opposée à la surface de marche (F) ; et
- une surface (23) d'étanchéité, qui est inclinée par rapport à ladite surface de contact à un angle (β) compris entre 90° et 105° et est capable de définir, avec la paroi périmétrique (P) du siège de logement (Q), une cavité (29) qui est destinée à recevoir un remplissage (U) de matériau d'étanchéité afin d'empêcher toute infiltration entre le godet (1) et ledit pont ;
ladite surface (22) de contact étant située entre ladite surface (23) d'étanchéité et ladite surface (24) de soudage de telle sorte que ladite surface (23) d'étanchéité et ladite surface (24) de soudage soient disposées à proximité, respectivement, de la paroi périmétrique (P) et de la surface du pont (F1) opposée à la surface de marche (F), afin d'obtenir l'étanchéité et le soudage du godet (1) au pont.

2. Godet d'arrimage selon la revendication 1, dans lequel ladite surface (23) d'étanchéité de l'élément (2) de type feuille s'étend dans le sens de la hauteur avec une épaisseur (h3) équivalente à celle du pont.

3. Godet d'arrimage selon l'une des revendications précédentes, dans lequel ledit élément (2) de type feuille a une forme circulaire.

4. Godet d'arrimage selon la revendication 3, dans lequel ladite surface (23) d'étanchéité s'étend de manière conique, de ladite surface (22) de contact à une surface (28b) de marche dudit godet, et a un diamètre qui est sensiblement équivalent au diamètre du siège de logement (Q) à proximité de ladite surface (22) de contact de manière à permettre une mise en prise avec une interférence dudit godet (1) à l'intérieur dudit siège de logement (Q).

5. Godet d'arrimage selon l'une des revendications précédentes, dans lequel ladite ouverture traversante (20) est en forme de croix.

6. Procédé pour assembler un godet d'arrimage selon la revendication 1 à l' intérieur d'un siège de logement (Q) formé sur le pont d'un bateau, **caractérisé en ce qu'**il comprend les étapes suivantes :
- une étape d'insertion du godet (1) à l'intérieur du siège de logement jusqu'à ce que ladite surface (22) de contact repose contre la surface (F1) du pont opposée à la surface de marche (F) ;
- une étape d'étanchéité pendant laquelle ladite cavité (29) est fermée avec du matériau d'étanchéité afin d'empêcher toute infiltration d'eau entre le godet (1) et le siège de logement (Q) ;
- une étape de soudage par résistance du godet (1) au pont afin de fixer mécaniquement le godet (1) au pont par dépôt d'au moins un cordon de soudure (Z) reliant ladite surface (24) de soudage du godet (1) à la surface du pont (F1) opposée à la surface de marche (F).

7. Procédé selon la revendication 6, dans lequel ladite étape de soudage par résistance est la seule étape de soudage envisagée dans ce procédé d'assemblage.

8. Procédé selon la revendication 6 ou 7, **caractérisé en ce qu'**il est réalisé pendant une phase de construction du bateau durant laquelle les ponts sont retournés et les surfaces des ponts opposées aux surfaces de marche sont directement accessibles sans l'utilisation d'échafaudages.

9. Procédé selon les revendications 6, 7 ou 8, dans lequel ladite étape d'étanchéité comprend une étape de dépôt d'une couche de matériau sur au moins un élément parmi ladite surface (23) d'étanchéité du godet et ladite paroi périmétrique (P) du siège de logement (Q), ladite étape de dépôt précédant ladite étape d'insertion du godet (1) à l'intérieur du siège de logement (Q).

10. Procédé selon la revendication 9, dans lequel ladite étape d'étanchéité comprend également une étape de distribution dudit matériau d'étanchéité entre ladite surface (23) d'étanchéité du godet (1) et la paroi périmétrique (P) du siège de logement (Q), ladite étape de distribution étant réalisée sensiblement au même moment que ladite étape d'insertion du godet (1) à l'intérieur du siège de logement (Q) et étant capable d'obtenir le remplissage de ladite cavité (29).

11. Procédé selon la revendication 10, dans lequel ledit matériau d'étanchéité pendant ladite étape de distribution est forcé à occuper l'ensemble de la cavité (29) au moyen d'une compression produite par l'insertion dudit godet (1) à l'intérieur du siège de logement (Q).

12. Procédé selon l'une des revendications 6, 7, 9, 10 et 11, comprenant une étape d'ébarbage, le long de la surface de marche (F), du matériau d'étanchéité émergeant de ladite cavité (29) pendant ladite étape d'insertion du godet à l'intérieur du siège de logement, ladite étape d'ébarbage étant réalisée après ladite étape de soudage par résistance.

13. Procédé selon la revendication 12, dans lequel ladite étape d'ébarbage est réalisée pendant une phase de construction du bateau durant laquelle les ponts ont leur surface de marche (F) dirigée vers le haut et ladite surface de marche (F) des ponts est directement accessible.

14. Procédé selon l'une des revendications 6 à 13, dans lequel ledit matériau d'étanchéité ne possède pas de caractéristiques de résistance mécanique.

15. Procédé selon la revendication 14, dans lequel ledit matériau d'étanchéité est un produit synthétique à base organique.

16. Procédé selon la revendication 15, dans lequel ledit matériau d'étanchéité est un caoutchouc de type silicone.
